# EUROPEAN PATENT APPLICATION

(11) **EP 4 794 228 A1**
(43) Date of publication of application: **19.08.2026**
(21) Application number: 24890143.1
(22) Date of filing: 08.07.2024
(51) Int. Cl.: H04J 3/16

(54) **DATA TRANSMISSION METHOD AND APPARATUS**

(30) Priority: 13.11.2023 CN 202311508223
(71) Applicant: HUAWEI TECHNOLOGIES CO., LTD., Shenzhen 518129 (CN)
(72) Inventor: SUN, Liang, Shenzhen, Guangdong 518129 (CN); YAO, Di, Shenzhen, Guangdong 518129 (CN)
(74) Representative: Gill Jennings & Every LLP
(86) International application number: PCT/CN2024/104213
(87) International publication number: WO 2025/102774

(57) **Abstract**

A data transmission method and apparatus are provided. The method includes: mapping service data to a data frame, and sending the data frame, where the data frame includes a payload area, the payload area includes a plurality of data blocks, each of the plurality of data blocks includes a first indication field and a payload field, and the first indication field indicates that an object borne in the payload field is data or padding. A technical solution of this application may be applied to the field of optical communication technologies. The first indication field is set in the data block, to indicate the object borne in the payload field of a fixed quantity of bytes, so that a receive end device determines a data amount of a received data frame in real time. In this way, in a process of performing rate adaptation, the receive end device does not need to cache data or read data from a cache, so that a lag in rate control in a data transmission process can be reduced, thereby reducing a data transmission delay and improving service transmission efficiency.

## Description

This application claims priority to Chinese Patent Application No. 202311508223.4, filed with the China National Intellectual Property Administration on November 13, 2023 and entitled "DATA TRANSMISSION METHOD AND APPARATUS", which is incorporated herein by reference in its entirety.

### TECHNICAL FIELD

This application relates to the field of optical communication technologies, and more specifically, to a data transmission method and apparatus.

### BACKGROUND

As continuous expansion of and optimization and adjustment of a network scale, a synchronous digital hierarchy (synchronous digital hierarchy, SDH) gradually retires from networks, and an optical transport network (optical transport network, OTN) gradually transits to transmit an Ethernet (Ethernet, ETH) service. Compared with bearing an SDH service, bearing an ETH service by the OTN does not require clock transparent transmission and is expected to have a lowest possible transmission delay.

Therefore, when data transmission is performed in the OTN, how to reduce a data transmission delay becomes an urgent problem to be resolved.

### SUMMARY

This application provides a data transmission method and apparatus, to reduce a lag in rate control, thereby reducing a data transmission delay and improving service transmission efficiency.

According to a first aspect, a data transmission method is provided. The method may be performed by a transmit end device or a component (for example, a chip or a chip system) of a transmit end device. This is not limited in this application. The method includes: mapping service data to a data frame, where the data frame includes a payload area, the payload area includes a plurality of data blocks, each of the plurality of data blocks includes a first indication field and a payload field, and the first indication field indicates that an object borne in the payload field is data or padding; and sending the data frame.

According to a second aspect, a data transmission method is provided. The method may be performed by a receive end device or a component (for example, a chip or a chip system) of a receive end device. This is not limited in this application. The method includes: receiving a data frame, where the data frame includes a payload area, the payload area includes a plurality of data blocks, each of the plurality of data blocks includes a first indication field and a payload field, and the first indication field indicates that an object borne in the payload field is data or padding; and demapping service data from the data frame based on a first indication field of at least one of the plurality of data blocks.

In some implementations, 2N+1 bits included in the first indication field indicate that the object borne in the payload field is data or padding, where N is an integer greater than or equal to 1, that is, a bearer object in the payload field is indicated in a majority decision manner, thereby improving reliability of the solution.

In the foregoing technical solution, the first indication field is set in the data block, to indicate the object borne in the payload field of a fixed quantity of bytes, so that the receive end device determines a data amount of the received data frame in real time. In other words, when the receive end device performs rate adaptation, a quantity of times for caching data or reading data from a cache can be reduced, so that a lag in rate control in a data transmission process can be reduced, thereby reducing a data transmission delay and improving service transmission efficiency.

With reference to the first aspect or the second aspect, in some implementations of the first aspect or the second aspect, the first indication field further indicate a quantity of sent data blocks in which a bearer object is data.

In the foregoing technical solution, the first indication field indicate the quantity of the sent data blocks in which the bearer object is data, so that the receive end device determines and/or corrects the data amount determined by the receive end device, thereby ensuring accuracy of frame alignment performed by the receive end device, and improving reliability of the solution.

With reference to the first aspect or the second aspect, in some implementations of the first aspect or the second aspect, the data frame further includes an overhead area, the overhead area includes a second indication field, and the second indication field indicates an offset of a start data block in a next multiframe period of the data frame.

With reference to the first aspect or the second aspect, in some implementations of the first aspect or the second aspect, the overhead area further includes a third indication field, and the third indication field indicates a moment at which hitless bandwidth adjustment is performed on the plurality of data blocks.

In the foregoing technical solution, the plurality of data blocks are transmitted, so that the receive end device can determine the data amount in real time, thereby reducing impact of the lag in rate control on hitless bandwidth adjustment. In addition, the third indication field may indicate a location of a data block on which hitless bandwidth adjustment starts to be performed in the plurality of data blocks, thereby reducing complexity of hitless bandwidth adjustment.

With reference to the first aspect or the second aspect, in some implementations of the first aspect or the second aspect, the first indication field occupies 1 byte, and the payload field occupies 192 bytes.

With reference to the first aspect or the second aspect, in some implementations of the first aspect or the second aspect, the data frame includes an optical transport network OTN frame or a flexible OTN frame.

With reference to the second aspect, in some implementations of the second aspect, the demapping the service data from the data frame based on the first indication field of the at least one of the plurality of data blocks includes: determining, based on a first data block and a data block that is received before the first data block is received in a current multiframe period, a first quantity of received data blocks in which a bearer object is data in the current multiframe period; and modifying a determining result of a bearer object in a payload field in a second data block when a quantity of data blocks indicated by count information carried in the first data block is different from the first quantity, where the second data block is a data block received after the first data block.

According to a third aspect, an embodiment of this application provides a data transmission apparatus. The apparatus is configured to perform the method according to the first aspect or the method according to the second aspect. Specifically, the apparatus may include a unit and/or a module configured to perform the method according to any one of the first aspect or the implementations of the first aspect, or the apparatus may include a unit and/or a module, for example, a processing module and/or a transceiver module, configured to perform the method according to any one of the second aspect or the implementations of the second aspect.

In an implementation, the data transmission apparatus may include a unit and/or a module configured to perform the method according to any one of the first aspect or the foregoing implementations of the first aspect, and is a transmit end device. The transceiver module may be a transceiver or an input/output interface. The processing module may be at least one processor. Optionally, the transceiver may be a transceiver circuit. Optionally, the input/output interface may be an input/output circuit.

Alternatively, the data transmission apparatus is a chip, a chip system, or a circuit in a transmit end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

In another implementation, the data transmission apparatus may include a unit and/or a module configured to perform the method according to any one of the second aspect or the foregoing implementations of the second aspect, and is a receive end device. The transceiver module may be a transceiver or an input/output interface. The processing module may be at least one processor. Optionally, the transceiver may be a transceiver circuit. Optionally, the input/output interface may be an input/output circuit.

Alternatively, the data transmission apparatus is a chip, a chip system, or a circuit in a receive end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fourth aspect, an embodiment of this application provides a processor, configured to perform the methods according to the foregoing aspects.

Operations such as sending and obtaining/receiving related to the processor may be understood as operations such as outputting and receiving or inputting of the processor, or operations such as sending and receiving performed by a radio frequency circuit and an antenna, unless otherwise specified, or provided that the operations do not contradict actual functions or internal logic of the operations in related descriptions. This is not limited in this application.

According to a fifth aspect, an embodiment of this application provides a computer-readable storage medium. The computer-readable storage medium stores program code executed by a device, and the program code is used to perform the method according to any implementation of the first aspect or the second aspect.

According to a sixth aspect, an embodiment of this application provides a computer program product including instructions. When the computer program product is run on a computer, the computer is caused to perform the method according to any implementation of the first aspect or the second aspect.

According to a seventh aspect, an embodiment of this application provides a chip. The chip includes a processor and a communication interface. The processor reads, through the communication interface, instructions stored in a memory, to perform the method according to any implementation of the first aspect to the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any implementation of the first aspect or the second aspect.

For beneficial effects brought by the third aspect to the seventh aspect, refer to the descriptions of beneficial effects in the first aspect or the second aspect. Details are not described herein again.

### BRIEF DESCRIPTION OF DRAWINGS

FIG. 1 is a diagram of an application scenario according to an embodiment of this application;
FIG. 2 is a diagram of a hardware structure of an OTN device according to an embodiment of this application;
FIG. 3 is a diagram of a structure of an optical transport network data frame;
FIG. 4 is a diagram of a structure of an optical transport network data frame according to an embodiment of this application;
FIG. 5 is a diagram of a structure of a data block according to an embodiment of this application;
FIG. 6 is a diagram of another structure of a data block according to an embodiment of this application;
FIG. 7 is a diagram of another structure of an optical transport network data frame according to an embodiment of this application;
FIG. 8 is a schematic flowchart of a data transmission method according to an embodiment of this application;
FIG. 9 is a block diagram of a data transmission apparatus according to an embodiment of this application; and
FIG. 10 is a block diagram of an OTN device according to an embodiment of this application.

### DESCRIPTION OF EMBODIMENTS

The following describes technical solutions of this application with reference to the accompanying drawings.

In descriptions of embodiments of this application, unless otherwise specified, "/" means "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, and includes a singular item (piece) or any combination of a plurality of items (pieces). For example, at least one item (piece) of a, b, or c may indicate: a, b, c, a and b, a and c, b and c, or a, b, and c, where a, b, and c may be singular or plural.

Prefix words such as "first" and "second" in embodiments of this application are merely intended to distinguish between different described objects, and there is no limitation on positions, sequences, priorities, quantities, content, or the like of the described objects. In embodiments of this application, use of the prefix words such as ordinal numbers used to distinguish between the described objects constitutes no limitation on the described objects. For descriptions of the described objects, refer to context descriptions in claims or embodiments. Use of the prefix words should not constitute a redundant limitation.

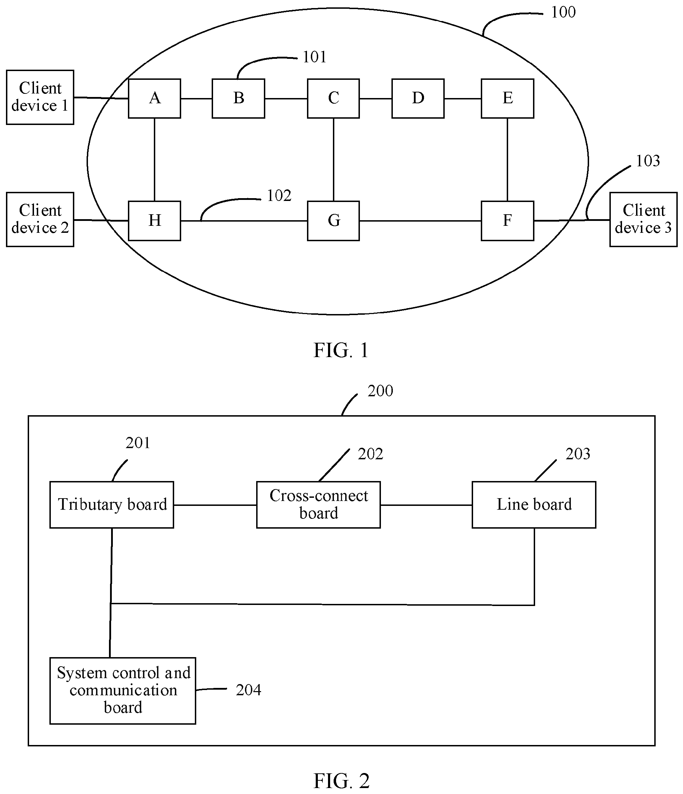

Embodiments of this application are applicable to an optical network, for example, an OTN. One OTN is usually formed by connecting a plurality of devices through an optical fiber, and may be formed into different topology types such as a linear topology, a ring topology, and a mesh topology based on specific requirements. An OTN 100 shown in FIG. 1 includes eight OTN devices 101, that is, devices A to H. An optical fiber 102 is configured to connect two devices, and a client service interface 103 is configured to receive or send client service data. As shown in FIG. 1, the OTN 100 is configured to transmit service data for client devices 1 to 3. The client device is connected to the OTN device through the client service interface. For example, in FIG. 1, the client devices 1 to 3 are respectively connected to the OTN devices A, H, and F.

In this embodiment of this application, the service data refers to a service that can be borne by an optical transport network. For example, the service may be an Ethernet service, a packet service, or a wireless backhaul service. The service data may also be referred to as a service signal, client data, or client service data.

Based on an actual requirement, one OTN device may have different functions. Generally, the OTN device includes an optical-layer device, an electrical-layer device, and an optical-electrical hybrid device. The optical-layer device is a device that can process an optical-layer signal, for example, an optical amplifier (optical amplifier, OA) or an optical add/drop multiplexer (optical add/drop multiplexer, OADM). The OA may also be referred to as an optical line amplifier (optical line amplifier, OLA), and is mainly configured to amplify an optical signal, to support a longer transmission distance when specific performance of the optical signal is ensured. The OADM is configured to perform space transformation on the optical signal, so that the optical signal can be output from different output ports (sometimes referred to as directions). The electrical-layer device is a device that can process an electrical-layer signal, for example, a device that can process an OTN signal. The optical-electrical hybrid device is a device that has a capability of processing an optical-layer signal and an electrical-layer signal. It should be noted that, one OTN device may integrate a plurality of different functions based on a specific integration requirement. The technical solutions provided in this application are applicable to OTN devices that have different forms and degrees of integration and that include an electrical-layer function.

FIG. 2 is a diagram of a possible hardware structure of an OTN device, for example, the device A in FIG. 1. Specifically, the OTN device 200 includes a tributary board 201, a cross-connect board 202, a line board 203, an optical-layer processing board (not shown in the figure), and a system control and communication board 204. Based on a specific requirement, types and quantities of boards included in OTN devices may be different. For example, an OTN device used as a core node does not include the tributary board 201. For another example, an OTN device used as an edge node includes a plurality of tributary boards 201, or does not include the cross-connect board 202. For still another example, an OTN device supporting only an electrical-layer function may not include the optical-layer processing board.

The tributary board 201, the cross-connect board 202, and the line board 203 are configured to process an electrical-layer signal of an OTN. The tributary board 201 is configured to receive and send various client services such as an SDH service, a packet service, an Ethernet service, and a fronthaul service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame and demap the service data from the data frame. The cross-connect board 202 is configured to exchange data frames, to complete exchange of one or more types of data frames. The line board 203 mainly implements processing of a line-side data frame. Specifically, the line board 203 may be divided into a line-side optical module and a signal processor. The line-side optical module may be referred to as an optical transceiver, and is configured to receive and/or send the data frame. The signal processor is configured to multiplex and demultiplex the line-side data frame, or map and demap the line-side data frame. The system control and communication board 204 is configured to implement system control. Specifically, the system control and communication board collects information from different boards, or sends a control instruction to a corresponding board. It should be noted that, unless otherwise specified, there may be one or more specific components (such as signal processors). This is not limited in this application. It should be further noted that types of boards included in the device, and function designs and quantities of the boards are not limited in this application. It should be noted that in a specific implementation, the foregoing two boards may alternatively be designed as one board. In addition, the OTN device may further include a standby power supply, a heat dissipation fan, and the like.

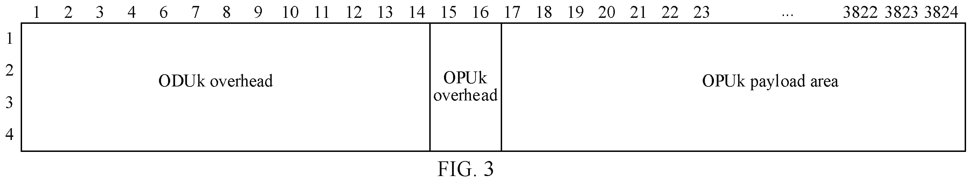

It should be noted that a data frame structure used by the OTN device in embodiments of this application is an OTN frame, which is used to bear various service data and provide rich management and monitoring functions. The OTN frame may be an optical payload unit-k (optical payload unit-k, OPUk) frame, an optical data unit-k (optical data unit-k, ODUk) frame, or an optical channel transport unit-k (optical transport unit-k, OTUk). k represents different rate levels: k=0, 1, 2, 3, 4, Cn, and flex, which respectively represent a bit rate of 1.25 gigabits per second (Gbit/s or Gbps), 2.5 Gbit/s, 10 Gbit/s, 40 Gbit/s, 100 Gbit/s, n*100 Gbit/s, and n*1.25 Gbit/s (n≥2). FIG. 3 is a diagram of a frame structure of an OTN frame. As shown in FIG. 3, the OTN frame is a frame structure with four rows and a plurality of columns, including an overhead area and a payload area. Each column is 1 byte (byte, B). In the structure of the OTN frame shown in FIG. 3, the first 4 rows*16 columns are overhead areas of an OTU/ODU/optical payload unit (optical payload unit, OPU), and the following are OPU payload areas. An OPUk payload area and an OPUk overhead area form an OPUk frame, the OPUk frame and an ODUk overhead area form an ODUk frame, and the ODUk frame, an OTUk overhead area, a frame alignment signal (frame alignment signal, FAS), and a forward error correction (forward error correction, FEC) check area form an OTUk frame. For a more specific structure of the OTN frame, refer to related descriptions in a current protocol. Details are not described herein.

Unless otherwise specified, an OPU frame is any one of an OPUk, an OPUCn, or an OPUflex, an ODU frame is any one of an ODUk, an ODUCn, or an ODUflex, and an OTU frame is any one of an OTUk, an OTUCn, or a FlexO. It should be further noted that, with development of OTN technologies, a new type of OTN frame may be defined, and is also applicable to this application.

As described above, as continuous expansion of a network scale and optimization and adjustment, an SDH gradually retires from networks, and an OTN gradually transits to transmit an ETH service. Compared with bearing an SDH service, bearing an ETH service by the OTN does not require clock transparent transmission and is expected to have a lowest possible transmission delay. In existing OTN technologies, a lower-order ODU may be multiplexed into a higher-order ODU. Specifically, four ODU1s may be multiplexed into one ODU2, four ODU2s may be multiplexed into one ODU3, and 16 ODU1s may be multiplexed into one ODU3. An OPUk of the higher-order ODU may be divided into a plurality of tributary slots (tributary slots, TSs) through byte-granularity time division multiplexing (time division multiplexing, TDM) interleaving. One TS includes a part of the OPUk overhead area and a part of the OPUk payload area. For example, an OPU2 may be divided into four TSs of 2.5 Gbps, or may be divided into eight TSs of 1.25 Gbps. For another example, an OPU3 may be divided into 16 TSs of 2.5 Gbps, or may be divided into 32 TSs of 1.25 Gbps. When the lower-order ODU is mapped to a slot of the higher-order ODU, an overhead (overhead, OH) is generally used to notify rate adaptation of a client signal, and the foregoing OH may include justification control (justification control, JC) 1 to JC6. For specific content of JC1 to JC6, refer to related descriptions in a current protocol. Details are not described herein. When the lower-order ODU is mapped to the higher-order ODU through a generic mapping procedure (generic mapping procedure, GMP), a data amount in a next frame period needs to be determined in advance based on statistics of a historical rate. Because this control method has a lag in rate control, data continuity needs to be strictly ensured during ODU cross-connection scheduling. In this way, after the cross-connection scheduling, data needs to be cached, so that an expected amount of data can be scheduled in the next frame period. However, a scheduling delay is added when the data is read from and written into the cache, so that a low-delay requirement needed by an ETH service cannot be met when the current OTN is applied to transmission of the ETH service. In addition, when hitless bandwidth adjustment is performed based on the GMP, the lag in rate control increases complexity of bandwidth adjustment.

To resolve the foregoing problem, in embodiments of this application, based on structures of current OTN frames, a data block is defined in a tributary slot of a high-order OTN frame, and a receive end device may determine a data amount of a low-order OTN frame through the data block. In other words, when performing rate adaptation, the receive end device does not need to cache data or read data from a cache, thereby reducing a delay of transmitting a service by an OTN device.

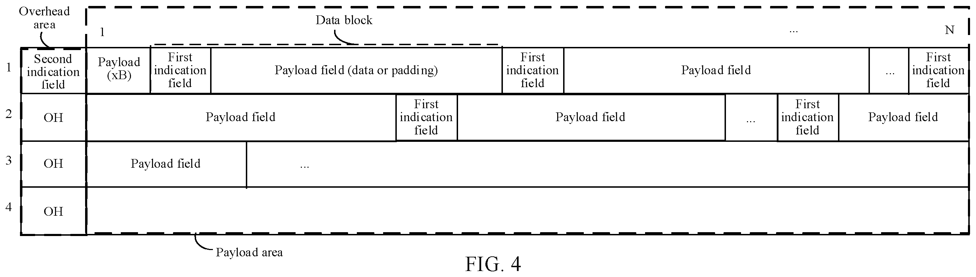

FIG. 4 shows a structure of an OTN frame according to an embodiment of this application. As shown in FIG. 4, a payload area of the OTN frame includes at least one TS of 4 rows×N columns, where the TS includes a plurality of data blocks, each data block includes a first indication field and a payload field, the first indication field indicates that an object borne in the payload field is data or padding, and the payload field is used to bear data or padding. Service transmission is performed between a transmit end device and a receive end device by using a data block as a minimum transmission unit. For example, N may be a quantity of columns of a TS, and a specific value of N may be determined based on an order of a high-order OTN frame and a rate of each TS. For example, when the high-order OTN frame is an ODU2 and the rate of each TS is 1.25 Gbps, N may be 476; when the high-order OTN frame is an ODU2 and the rate of each TS is 2.5 Gbps, N may be 952; and when the high-order OTN frame is an ODU2 and the rate of each TS is 5 Gbps, N may be 1904. Further, when a lower-order OTN frame is mapped to the higher-order OTN frame, M tributary slots may be occupied. That is, when the lower-order OTN frame is transmitted in the ODU2, N×M columns are occupied, and the N×M columns and 4×L rows form a multiframe period. M may be a positive integer, and L indicates a multiplexing period of a tributary slot overhead (tributary slot overhead, TSOH) of the high-order OTN frame, that is, the TSOH is multiplexed once for every L frames in the high-order OTN frame. For example, when the high-order OTN frame is a ODU2 in which the rate of each TS is 1.25 Gbps, L may be 8. The slot overhead part may carry a second indication field, where the second indication field indicates an offset of a start data block in a next multiframe period. For example, in FIG. 4, there is a payload field of xB before the first data block, where xB may be considered as an offset of a start data block of the multiframe period, and the start offset of xB may be indicated by a second indication field in a previous multiframe period. During actual implementation, one data block may be borne across rows. For example, a 1^{st} row bears a first indication field of a data block a, and a 2^{nd} row bears a payload field of the data block a; or a 1^{st} row bears a first indication field and a part of a payload field of a data block b, and a 2^{nd} row bears a remaining payload field of the data block b. Alternatively, one data block may be borne across tributary slots. For example, a current tributary slot bears a first indication field of a data block c, and a next tributary slot bears a payload field of the data block c; or a current tributary slot bears a first indication field and a part of a payload field of a data block d, and a next tributary slot bears a remaining payload field of the data block d. Alternatively, one data block may be borne across multiframe periods. For example, a current multiframe period bears a first indication field of a data block e, and a next multiframe period bears a payload field of the data block e; or a current multiframe period bears a first indication field and a part of a payload field of a data block f, and a next multiframe period bears a remaining payload field of the data block f.

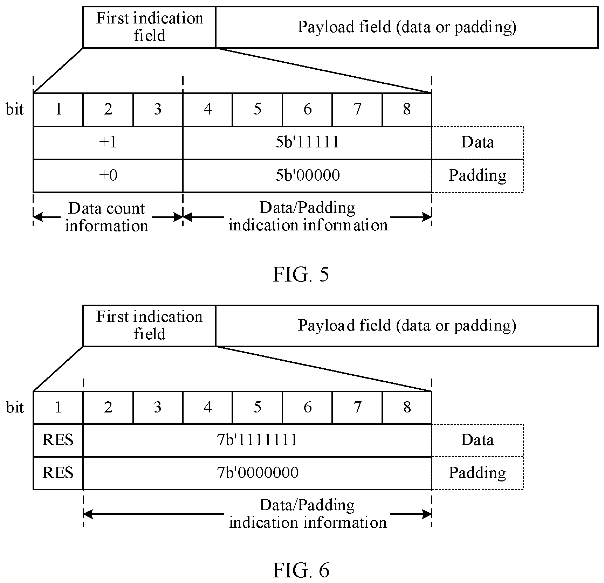

FIG. 5 is a diagram of a first indication field according to an embodiment of this application. As shown in FIG. 5, the first indication field may include eight bits (bits), where a 1^{st} bit to a 3^{rd} bit are used to carry data count information, and a 4^{th} bit to an 8^{th} bit are used to carry data/padding indication information. When a payload field carries data, a transmit end device may set values of five bits in total from the 4^{th} bit to the 8^{th} bit to 1 (that is, 5b'11111). When the payload field is padding, the transmit end device may set the values of the five bits in total from the 4^{th} bit to the 8^{th} bit to 0 (that is, 5b'00000). When the transmit end device sends a data frame, in a multiframe period, each time a data block in which a payload field carries data is sent, values of three bits in total from the 1^{st} bit to the 3^{rd} bit are increased by 1; and each time a data block in which a payload field carries padding is sent, the values of the three bits in total from the 1^{st} bit to the 3^{rd} bit remain unchanged. For example, initial values of the 1^{st} bit to the 3^{rd} bit are "000". When a first data block sent in a multiframe period 1 carries data, values of a 1^{st} bit to a 3^{rd} bit of the first data block are "001"; when a second data block sent in the multiframe period 1 carries data, values of a 1^{st} bit to a 3^{rd} bit of the second data block are "010"; when a third data block sent in the multiframe period 1 carries padding, values of a 1^{st} bit to a 3^{rd} bit of the third data block are "000"; and when a fourth data block sent in the multiframe period 1 carries data, values of a 1^{st} bit to a 3^{rd} bit of the fourth data block are "100". The rest can be deduced by analogy. In some implementations, the data count information may alternatively not be limited to one multiframe period. For example, starting from an initialization state of the transmit end device, each time the transmit end device sends a data block in which a bearer object is data, a value of the data count information may be increased by 1.

FIG. 6 is another diagram of a first indication field according to an embodiment of this application. As shown in FIG. 6, the first indication field may include eight bits, where a 1^{st} bit may be a reserved field, and a 2^{nd} bit to an 8^{th} bit are used to carry data/padding indication information. When a payload field carries data, a transmit end device may set values of seven bits in total from the 2^{nd} bit to the 8^{th} bit to 1 (that is, 7b'1111111). When the payload field is padding, the transmit end device may set the values of the seven bits in total from the 2^{nd} bit to the 8^{th} bit to 0 (that is, 7b'0000000).

For example, a size of the payload field in the data block shown in FIG. 5 or FIG. 6 may be 192 bytes, or may be 256 bytes, or may be bytes of another size.

It should be understood that forms of the first indication field shown in FIG. 5 and FIG. 6 are merely examples for description. During actual implementation, the first indication field may alternatively include more or fewer bits, or the data/padding indication information may alternatively occupy more or fewer bits.

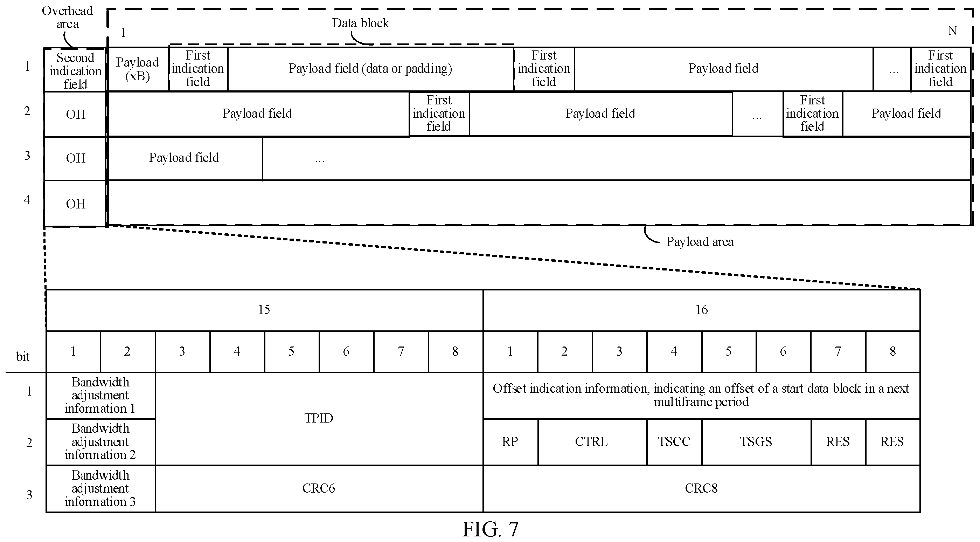

FIG. 7 is a diagram of a TS overhead of an OTN frame according to an embodiment of this application. As shown in FIG. 7, first bits and second bits (that is, first two bits of JC4 to JC6) in a 1^{st} row to a 3^{rd} row of a 15^{th} column of the TS overhead are used to carry bandwidth adjustment information, to indicate a receive end device to perform hitless adjustment on slot bandwidth or not to perform hitless adjustment on timeslot bandwidth. For example, when hitless bandwidth adjustment does not need to be performed or the receive end device needs to be indicated to stop hitless bandwidth adjustment, values of bandwidth indication information 1 to bandwidth indication information 3 are all "11". When the receive end device needs to perform hitless bandwidth adjustment, the values of the bandwidth indication information 1 to the bandwidth indication information 3 are all "00". 3^{rd} bits to 8^{th} bits in the 1^{st} row and a 2^{nd} row of the 15^{th} column of the TS overhead are used to carry a tributary port number (tributary port ID, TPID) to which a slot is added or from which a slot is removed. A 3^{rd} bit to an 8^{th} bit in the 3^{rd} row of the 15^{th} column of the TS overhead are used to carry check information, for example, carry a 6-bit binary cyclic redundancy check (cyclic redundancy check, CRC) code. The check information is used to protect a TPID overhead, that is, check the 3^{rd} bits to the 8^{th} bits in the 1^{st} row and the 2^{nd} row of the 15^{th} column A 1^{st} bit to an 8^{th} bit in a 1^{st} row of a 16^{th} column of the TS overhead are used to carry offset indication information, where the offset indication information indicates an offset of a start data block in a next multiframe period. A 1^{st} bit to an 8^{th} bit in a 2^{nd} row of the 16^{th} column of the TS overhead are a control protocol overhead for hitless bandwidth adjustment of a slot. For example, the 1^{st} bit, the 2^{nd} bit and the 3^{rd} bit, the 4^{th} bit, and the 5^{th} bit and the 6^{th} bit in the 1^{st} row of the 16^{th} column are respectively a bandwidth resize protocol (resize protocol, RP) bit, a control (control, CTRL) bit, a tributary slot connectivity check (tributary slot connectivity check, TSCC) bit, and a tributary slot group status (tributary slot group status, TSGS) bit. For functions of the foregoing bits, refer to related descriptions in a current protocol. Details are not described herein again. A 1^{st} bit to an 8^{th} bit in a 3^{rd} row of the 16^{th} column of the TS overhead are used to carry check information, for example, carry CRC8. The check information is used to protect the control protocol overhead, that is, check the 1^{st} bit to the 8^{th} bit in the 2^{nd} row of the 16^{th} column.

Based on the foregoing solution, through the data/padding indication information of the data block, rate adaptation during mapping of a lower-order OTN frame to a higher-order OTN frame can be implemented without using a GMP, so that a lag in rate control can be reduced, thereby reducing a service transmission delay. A plurality of data blocks are transmitted, so that a receive end device can determine a data amount in real time, thereby reducing impact of the lag in rate control on hitless bandwidth adjustment. In addition, the bandwidth indication information 1 to 3 may indicate a location of a data block on which hitless bandwidth adjustment starts to be performed in the plurality of data blocks, thereby reducing complexity of hitless bandwidth adjustment.

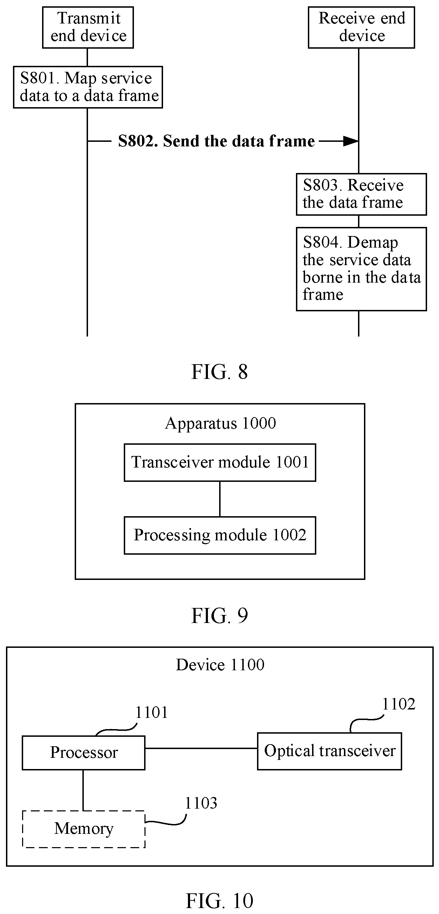

FIG. 8 is a schematic flowchart of a data transmission method according to this application. As shown in FIG. 8, a transmit end device may be an OTN device, or may be a component (for example, a chip or a chip system) of an OTN device. A receive end device may be an OTN device, or may be a component (for example, a chip or a chip system) of an OTN device.

Specifically, the method includes the following steps.

S801. The transmit end device maps service data to a data frame.

Specifically, the data frame includes a payload area, the payload area bears a plurality of data blocks, each of the plurality of data blocks includes a first indication field and a payload field, and the first indication field indicates that an object borne in the payload field is data or padding.

For example, the first indication field indicates, through the data/padding indication information in the foregoing embodiments, that the object borne in the payload field is data or padding.

For example, the data frame may include the OTN frame shown in FIG. 4 or FIG. 7, and the data block may include the data block shown in FIG. 5 or FIG. 6. The data frame may be any one of an OPU frame, an ODU frame, or an OTU frame. The service data may be data obtained by the transmit end device through a client service interface. Alternatively, the service data may be data that is locally generated by the transmit end device and that needs to be transmitted. The data obtained through the client service interface may include an OTN frame, where the OTN frame may include a lower-order OTN frame. Alternatively, the data obtained through the client service interface may further include another type of data, for example, Ethernet service data.

In an example, if the service data is data borne in a lower-order ODU frame obtained by the transmit end device through the client service interface, that the transmit end device maps the service data to the data frame may include: The transmit end device maps the data borne in the lower-order ODU frame to one or more data blocks in the data frame in this application.

In another example, if the service data is data that is locally generated by the transmit end device and that needs to be transmitted, that the transmit end device maps the service data to the data frame may include: The transmit end device directly maps the local data to one or more data blocks in the data frame in this application.

In some implementations, the first indication field further indicates a quantity of sent data blocks in which a bearer object is data.

For example, the first indication field indicates, through the data count information in the foregoing embodiments, the quantity of the sent data blocks in which the bearer object is data. The quantity of the data blocks that has been sent by the transmit end device and in which the bearer object is data helps the receive end device determine whether a data amount obtained by the receive end device through parsing is accurate.

In some implementations, the data frame further includes an overhead area, the overhead area includes a second indication field, and the second indication field indicates an offset of a start data block in a next multiframe period.

For example, the second indication field may include the second indication field in the foregoing embodiments. For example, the offset indication information indicates the offset of the start data block in the next multiframe period.

In some implementations, the overhead area further includes a third indication field, and the third indication field indicates a moment at which hitless bandwidth adjustment is performed on the plurality of data blocks.

For example, the third indication field may indicate, through the bandwidth adjustment information 1 to 3 in the foregoing embodiments, the moment at which hitless bandwidth adjustment is performed on the plurality of data blocks. When the bandwidth adjustment information 1 to 3 are all "00", it indicates that hitless bandwidth adjustment needs to be performed; and when the bandwidth adjustment information 1 to 3 are all "11", it indicates that hitless bandwidth adjustment does not need to be performed. In a specific implementation, the receive end device and the transmit end device may negotiate in advance the moment of hitless bandwidth adjustment. For example, it may be negotiated in advance that the receive end device starts to perform hitless bandwidth adjustment on an n^{th} data block after receiving the information indicating to perform hitless bandwidth adjustment. For example, after receiving the bandwidth adjustment information 1 to 3, the receive end device may determine, in a majority decision manner, whether to perform hitless bandwidth adjustment. For example, if values of two or more pieces of the bandwidth adjustment information 1 to 3 received by the receive end device are "00", the receive end device starts hitless bandwidth adjustment on the n^{th} data block. For another example, if values of two or more pieces of the bandwidth adjustment information 1 to 3 received by the receive end device are "11", the receive end device does not perform hitless bandwidth adjustment. For example, n is a positive integer. For example, n may be 1, or may be another value. This is not specifically limited in this application.

S802. The transmit end device sends the data frame to the receive end device.

S803. The receive end device receives the data frame.

S804. The receive end device demaps the service data borne in the data frame.

For example, each time the receive end device receives a data block, the receive end device performs demapping based on a first indication field of the data block, and determines, based on the first indication field, whether an object borne in a payload field of the data block is data or padding. For example, the object borne in the payload field of the data block may be determined through majority decision. If the first indication field indicates, through the five bits shown in FIG. 5, the object borne in the payload field, the receive end device determines that the object borne in the payload field is data when three or more bits in the five bits are 1. If the first indication field indicates, through the seven bits shown in FIG. 6, the object borne in the payload field, the receive end device determines that the object borne in the payload field is data when four or more bits in the seven bits are 1. In this way, the receive end device may determine, in real time, a data amount received by the receive end device.

When the first indication field further indicates the quantity of the data blocks that have been sent by the transmit end device and that bear data (for example, further carries the data count information), the receive end device determines, based on the quantity indicated by the first indication field and a quantity recorded by a local data counter, whether an error occurs in a demapping process of the receive end device. A quantity of bits used by the local data counter is the same as a quantity of bits of the data count information, for example, the local data counter and the data count information both occupy three bits. For example, in an initial state, the receive end device determines an initial value of the local data counter based on the first indication field of the received data block. For example, a value obtained through a plurality of times of checking performed on the data count information carried in the received data block is used as the initial value. After the initial value is determined, each time a data block bearing data is received, a value of the local data counter is increased by 1. Further, when the receive end device determines that the quantity of data blocks indicated by the first indication field of the received data block is not equal to the quantity recorded by the local data counter, the receive end device adjusts, in the subsequent demapping process, a determining result of data or padding borne in the payload field, to correct the data amount of the received data frame. For example, if the quantity of data blocks determined by the receive end device based on the first indication field is less than the quantity of data blocks recorded by the local data counter by 1, it indicates that the receive end device incorrectly parses a data block that bears padding as a data block that bears data. In the subsequent demapping process, when determining that a data block bears data, the receive end device modifies a determining result to that the data block bears padding. That is, a count of the local data counter remains unchanged. If the quantity of the data blocks determined by the receive end device based on the first indication field is greater than the quantity recorded by the local data counter by 1, it indicates that the receive end device incorrectly parses a data block that bears data as a data block that bears padding. In the subsequent demapping process, when determining that a data block bears padding, the receive end device modifies a determining result to that the data block bears data. That is, a count of the local data counter is increased by 1. In this way, the receive end device may correct the data amount parsed by the receive end device.

According to the data transmission method provided in this embodiment of this application, the first indication field is set in the data block, to indicate the object borne in the payload field of a fixed quantity of bytes, so that the receive end device determines the data amount of the received data frame in real time. In this way, in a process of performing rate adaptation, the receive end device does not need to cache data or read data from a cache, so that a lag in rate control in a data transmission process can be reduced, thereby reducing a data transmission delay and improving service transmission efficiency. In addition, a plurality of data blocks are transmitted, so that the receive end device can determine the data amount in real time, thereby reducing impact of the lag in the rate control on hitless bandwidth adjustment.

The foregoing describes the data transmission method provided in embodiments of this application with reference to FIG. 1 to FIG. 8. In embodiments of this application, unless otherwise stated or there is a logic conflict, terms and/or descriptions between various embodiments are consistent and may be mutually referenced, and technical features in different embodiments may be combined based on an internal logical relationship thereof to form a new embodiment.

The following describes in detail a data transmission apparatus provided in embodiments of this application with reference to FIG. 9 and FIG. 10. It should be understood that descriptions of apparatus embodiments correspond to the descriptions of the method embodiments. Therefore, for content that is not described in detail, refer to the foregoing method embodiments. For brevity, some content is not described again.

FIG. 9 is a block diagram of a data transmission apparatus 1000 according to an embodiment of this application. The apparatus 1000 includes a transceiver module 1001, where the transceiver module 1001 may be configured to implement a corresponding transceiver function. The transceiver module 1001 may also be referred to as a transceiver unit.

The apparatus 1000 further includes a processing module 1002 (which is referred to as a processing unit), and the processing module 1002 may be configured to implement a corresponding processing function.

Optionally, the apparatus 1000 further includes a storage unit. The storage unit may be configured to store instructions and/or data. The processing module 1002 may read the instructions and/or the data in the storage unit, to cause the apparatus to implement actions of a related apparatus in the foregoing method embodiments.

The apparatus 1000 may be configured to perform actions performed by the transmit end device or the receive end device in the foregoing method embodiments. In this case, the apparatus 1000 may be a component of the transmit end device or the receive end device. The transceiver module 1001 is configured to perform receiving-related and sending-related operations of the transmit end device or the receive end device in the foregoing method embodiments. The processing module 1002 is configured to perform processing-related operations of the transmit end device or the receive end device in the foregoing method embodiments.

It should be understood that a specific process in which the modules perform the foregoing corresponding steps is described in detail in the foregoing method embodiments. For brevity, details are not described herein again.

FIG. 10 is a diagram of a structure of an OTN device according to an embodiment of this application. As shown in FIG. 10, the OTN device 1100 includes a processor 1101 and an optical transceiver 1102. The OTN device may be used in both a transmit end device and a receive end device. The OTN device shown in FIG. 10 may include any OTN device shown in FIG. 1, or may include the OTN device shown in FIG. 2.

When the OTN device is used in the transmit end device, the processor 1101 is configured to implement the method performed by the transmit end device in FIG. 8, for example, S801, and the optical transceiver 1102 is configured to implement the method performed by the transmit end device in FIG. 8, for example, S802. When the OTN device is used in the receive end device, the processor 1101 is configured to implement the method performed by the receive end device in FIG. 8, for example, S804, and the optical transceiver 1102 is configured to implement the method performed by the receive end device in FIG. 8, for example, S803. In an implementation process, steps of a processing procedure may be performed by a hardware integrated logic circuit of the processor 1101 or by instructions in a form of software, to complete the method performed by the transmit end device in FIG. 8.

In this embodiment of this application, the processor 1101 may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor or any regular processor or the like. The steps of the method disclosed with reference to embodiments of this application may be directly performed by a hardware processor, or may be performed by a combination of hardware in the processor and a software unit.

In addition, the OTN device 1100 may include one or more processors 1101.

Optionally, the OTN device may further include a memory 1103, where program code executed by the processor 1101 to implement the foregoing method may be stored in the memory 1103. The OTN device 1100 may include one or more memories 1103.

Specifically, the memory 1103 may be coupled to the processor 1101. Coupling in embodiments of this application is indirect coupling or a communication connection between apparatuses, units, or modules, may be in an electrical form, a mechanical from, or another form, and is for information exchange between the apparatuses, the units, or the modules. Alternatively, the processor 1101 may cooperate with the memory 1103. The memory 1103 may be a non-volatile memory, for example, a hard disk drive (hard disk drive, HDD), or may be a volatile memory (volatile memory), for example, a random access memory (random access memory, RAM). The memory 1103 is any other medium that can be configured to carry or store expected program code in an instruction form or a data structure form and that can be accessed by a computer, but is not limited thereto. It should be noted that the apparatus in FIG. 10 may also be configured to perform method steps in variations of embodiments shown in the foregoing accompanying drawings. Details are not described herein.

Based on the foregoing embodiments, an embodiment of this application further provides a computer-readable storage medium. The storage medium stores a software program. When the software program is read and executed by one or more processors, the method according to any one or more of the foregoing embodiments may be implemented. The computer-readable storage medium may include any medium that can store program code, for example, a USB flash drive, a removable hard disk drive, a read-only memory, a random access memory, a magnetic disk, or an optical disc.

Based on the foregoing embodiments, an embodiment of this application further provides a chip. The chip includes a processor, configured to implement functions in any one or more of the foregoing embodiments, for example, obtain or process an OTN frame in the foregoing methods. Optionally, the chip further includes a memory. The memory is configured to store program instructions and data that are necessary for execution by the processor. The chip may include a chip, or may include a chip and another discrete component.

Apparently, a person skilled in the art may make various modifications and variations to embodiments of this application without departing from the scope of embodiments of this application. In this case, this application is also intended to cover these modifications and variations of embodiments of this application provided that such modifications and variations fall within the scope of protection defined by the claims of this application and equivalent technologies thereof.

It should be understood that, the processor mentioned in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the general-purpose processor may be any regular processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example instead of limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

A person of ordinary skill in the art may be aware that, units and steps in the examples described with reference to embodiments disclosed in this specification can be implemented by electronic hardware or a combination of computer software and electronic hardware. Whether the functions are performed by hardware or software depends on specific applications and design constraints of the technical solutions. A person skilled in the art may use different methods to implement the described functions for each particular application, but it should not be considered that, the implementation goes beyond the protection scope of this application.

In the several embodiments provided in this application, it should be understood that the disclosed apparatus and method may be implemented in other manners. For example, the described apparatus embodiment is merely an example. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented through software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium may include but is not limited to any medium that can store program code, for example, a USB flash drive, a removable hard disk drive, a ROM, a RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. It may be clearly understood by a person skilled in the art that, for the purpose of convenient and brief description, for a detailed working process of the foregoing system, apparatus, and unit, refer to a corresponding process in the foregoing method embodiments. Details are not described herein again.

## Claims

1. A data transmission method, comprising:
mapping service data to a data frame, wherein the data frame comprises a payload area, the payload area comprises a plurality of data blocks, each of the plurality of data blocks comprises a first indication field and a payload field, and the first indication field indicates that an object borne in the payload field is data or padding; and
sending the data frame.

2. The method according to claim 1, wherein the first indication field further indicates a quantity of sent data blocks in which a bearer object is data.

3. The method according to claim 1 or 2, wherein the data frame further comprises an overhead area, the overhead area comprises a second indication field, and the second indication field indicates an offset of a start data block in a next multiframe period of the data frame.

4. The method according to claim 3, wherein the overhead area further comprises a third indication field, and the third indication field indicates a moment at which hitless bandwidth adjustment is performed on the plurality of data blocks.

5. The method according to any one of claims 1 to 4, wherein the first indication field occupies 1 byte, and the payload field occupies 192 bytes.

6. The method according to any one of claims 1 to 5, wherein the data frame comprises an optical transport network OTN frame or a flexible OTN frame.

7. A data transmission method, comprising:
receiving a data frame, wherein the data frame comprises a payload area, the payload area comprises a plurality of data blocks, each of the plurality of data blocks comprises a first indication field and a payload field, and the first indication field indicates that an object borne in the payload field is data or padding; and
demapping service data from the data frame based on a first indication field of at least one of the plurality of data blocks.

8. The method according to claim 7, wherein the first indication field further indicates a quantity of sent data blocks in which a bearer object is data.

9. The method according to claim 7 or 8, wherein the data frame further comprises an overhead area, the overhead area comprises a second indication field, and the second indication field indicates an offset of a start data block in a next multiframe period of the data frame.

10. The method according to claim 9, wherein the overhead area further comprises a third indication field, and the third indication field indicates a moment at which hitless bandwidth adjustment is performed on the plurality of data blocks.

11. The method according to any one of claims 7 to 10, wherein the first indication field occupies 1 byte, and the payload field occupies 192 bytes.

12. The method according to any one of claims 7 to 11, wherein the data frame comprises an optical transport network OTN frame or a flexible OTN frame.

13. The method according to any one of claims 7 to 12, wherein the demapping the service data from the data frame based on the first indication field of the at least one of the plurality of data blocks comprises:
determining, based on a first data block and a data block that is received before the first data block is received in a current multiframe period, a first quantity of received data blocks in which a bearer object is data in the current multiframe period; and
modifying a determining result of a bearer object in a payload field in a second data block when a quantity of data blocks indicated by count information carried in the first data block is different from the first quantity, wherein the second data block is a data block received after the first data block.

14. A data transmission apparatus, comprising a module configured to perform the method according to any one of claims 1 to 6, or a module configured to perform the method according to any one of claims 7 to 13.

15. A data transmission apparatus, comprising at least one processor, wherein the at least one processor is coupled to at least one memory, and the at least one processor is configured to execute a computer program or instructions stored in the at least one memory, to cause the apparatus to perform the method according to any one of claims 1 to 6 or the method according to any one of claims 7 to 13.

16. A chip, wherein the chip comprises a processor and a communication interface, the communication interface is configured to receive a data frame and transmit the data frame to the processor, or send the data frame to another communication apparatus other than a communication apparatus comprising the chip, and the processor is configured to perform the method according to any one of claims 1 to 6, or the method according to any one of claims 7 to 13.
